# EUROPEAN PATENT SPECIFICATION

(11) **EP 3 330 511 B1**
(45) Date of publication and mention of the grant of the patent: **27.03.2019**
(21) Application number: 16202296.6
(22) Date of filing: 05.12.2016
(51) Int. Cl.: F01P 7/12, B60K 11/08

(54) **ENGINE TEMPERATURE REGULATING DEVICE**
MOTORTEMPERATURREGELUNGSVORRICHTUNG
DISPOSITIF DE RÉGULATION DE TEMPÉRATURE DE MOTEUR

(43) Date of publication of application: 06.06.2018
(73) Proprietor: Southern Taiwan University of Science and Technology, Tainan City 71005 (TW)
(72) Inventor: Lee, Cho Yu, Tainan City (TW); Chang, Jui Hung, Tainan City (TW); Lim, Chin Fong, Tainan City (TW)
(74) Representative: Lang, Christian

(56) References cited:
- DE-A1-102008 043 006
- DE-A1-102013 016 509
- DE-C- 347 315
- JP-A- 2005 042 705

## Description

The present invention relates to a temperature regulating device, in particular to the temperature regulating device installed to a casing with a cooled air inlet of an engine, and capable of adjusting an air intake hole to a smooth or obscured state according to a temperature change at the starting stage of the engine.

### BACKGROUND OF INVENTION

### 1. Description of the Related Art

In general, a conventional compulsory cooling device of a motorcycle engine directly drives a cooling fan during the operation of the engine to suck surrounding cold air from the cooling fan into a wind hood, and the cold air in the wind hook cools the engine. In other words, once the engine is started, the cooling fan will be rotated accordingly. Until the engine is stopped, the cooling fan is stopped synchronously. Since a fan cover is covered and mounted onto the cooling fan for preventing foreign substances from entering into the fan cover, and the fan cover usually comes with an air intake hole with a fixed size. When the engine is just started and still situated in a warm-up stage, the cooling fan sucks a large quantity of cold air from the air intake hole of the fan cover. As a result, it takes a longer time for the warm-up process, and the motorcycle is not ready for running in a short time. In addition, a too-long warm-up process not just incurs high fuel consumption only, but also produces waste gas and pollutes the environment.

To overcome the aforementioned drawback, document DE 10 2013 016509 A1 discloses an air quantity control device for a motor vehicle radiator installed in a casing with a cooling air inlet. Alternatively, R.O.C. Pat. No. 1421405 discloses a "Motorcycle engine cooling device" having a temperature switch connected to a cooling fan and installed in a cylinder head of an engine or an oil tank. When the temperature of the cylinder head of the engine or the oil tank is greater than or equal to a predetermined value, the temperature switch will be electrically conducted to turn on the cooling fan, and if the temperature of the cylinder head of the engine or the oil tank is smaller than a predetermined value, the temperature switch will not be electrically conducted, and the cooling fan will be turned off.

In addition, U.S. Pat. No. 6142108 discloses a "Temperature control system for use with an enclosure which houses an internal combustion engine" having a plurality of adjoining walls of the enclosure of the temperature control system, and an inlet louver assembly and an outlet louver assembly of an actuator are coupled to the walls. When a temperature sensor senses a temperature signal and outputs the temperature signal to an electrical processing circuit, the electrical processing circuit controls the actuator to drive the outlet louvers to move. Although such patent can adjust the size of the louvers according to temperature, the fan structure requires an inlet louver assembly and outlet louver assembly to be installed at the front and rear ends of the fan structure respectively. Obviously, the drawback of such patent includes requiring too many components and too complicated structure.

In view of the aforementioned drawbacks, the inventor of the present invention based on years of experience in the related industry to conduct extensive research and experiment, and finally developed an engine temperature regulating device in accordance with the present invention to overcome the drawbacks of the prior art.

### 2. Summary of the Invention

Since the conventional compulsory cooling device of a motorcycle has the drawbacks of causing a long warm-up process, increasing the fuel consumption, and polluting the environment, therefore, it is a primary objective of the present invention to control the timing of the cold air entering into the cooled air inlet by the adjustable fan cover module, so as to prevent a large quantity of cold air from affecting the engine warm-up time and achieve the effects of lowering the fuel consumption and reducing waste gas discharge.

To achieve the aforementioned and other objectives, the present invention provides an engine temperature regulating device installed in a casing with a cooled air inlet, comprising: a power source; a link rod module, connected to the power source; a control module, for detecting a temperature for starting the engine to obtain a temperature signal, and controlling the drive of the power source when the temperature signal is lower than a predetermined value or controlling and turning off the power source when the temperature signal achieves the predetermined value; and a fan cover module, covered onto the cooled air inlet, and further comprising: a fixed casing, formed by mounting a first surrounding member around the fixed casing, and the first sidewall having a plurality of first air intake holes and a plurality of first shelter plates arranged alternately with one another, and disposed at a plurality of first ventilation holes of the first surrounding member, and at least one fixed block disposed around the external periphery of the first surrounding member and capable of locking the casing with the cooled air inlet; and a movable casing, formed by mounting a second surrounding member around a second sidewall, and the second sidewall having a plurality of second air intake holes and a plurality of second shelter plates arranged alternately with one another, the second surrounding member having a plurality of second ventilation holes, and a positioning block disposed around the external periphery of the second surrounding member, and the link rod module being coupled to the movable casing, and the power source controlling the link rod module to rotate the movable casing, so as to adjust the first air intake hole and the first ventilation hole of the fixed casing to a smooth or obscured state, and when the first air intake hole is situated at the obscured state, the first ventilation hole still maintains a hole.

Wherein, the first air intake hole of the fixed casing is set to a smooth state when the engine is not started, and after the engine is started and if the engine temperature detected by the control module is lower than a predetermined value, then the power source will be driven to connect the power source to the link rod module, so that the movable casing of the link rod module will be rotated to cover the second shelter plate of the movable casing onto the first air intake hole of the fixed casing and drive the first air intake hole into the obscured state. Now, external cold air cannot enters from the air intake hole into the engine cooled air inlet, and the amount of air in the wind hood is limited to accelerate the engine warm-up process. If the engine temperature detected by the control module reaches a predetermined value, then the power source will be turned off, so that the link rod module coupled to the movable casing will restores its initial position and let the first air intake hole of the fixed casing and the second air intake hole of the movable casing be superimposed and drive them into the smooth state. As a result, surrounding cold air is sucked into the air inlet continuously to assist the heat dissipation of the engine.

### BRIEF DESCRIPTION OF THE DRAWINGS

FIG. 1 is a schematic view of an engine temperature regulating device of the present invention;
FIG. 2 is an exploded view of a fan cover module of the present invention;
FIG. 3 is a schematic view of an engine temperature regulating device of the present invention at an initial state;
FIG. 4 is a schematic view of an engine temperature regulating device of the present invention at a state when the engine is turned on;
FIG. 5 is a schematic view of an engine temperature regulating device of the present invention at a state when the engine is turned off; and
FIG. 6 is a side view of an engine temperature regulating device of the present invention at a state when the engine is turned on.

### DESCRIPTION OF THE PREFERRED EMBODIMENTS

The above and other objects, features and advantages of this disclosure will become apparent from the following detailed description taken with the accompanying drawings.

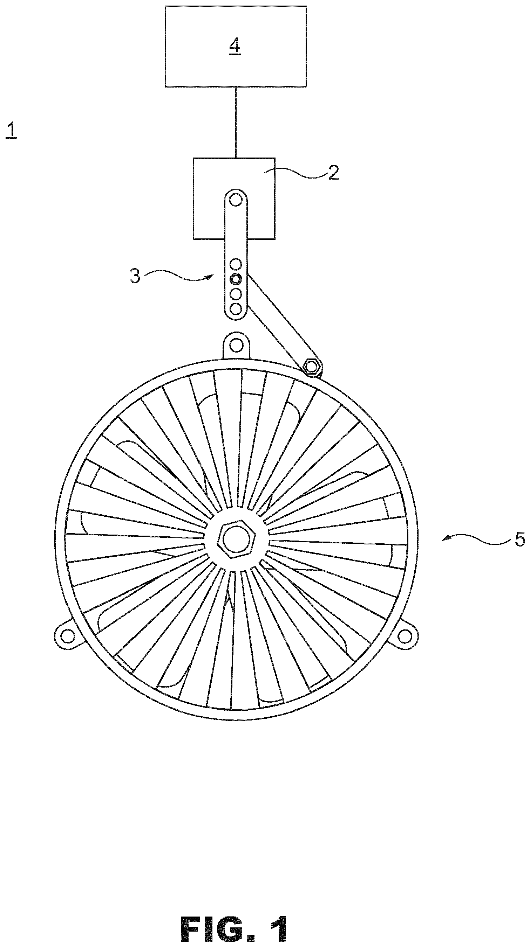

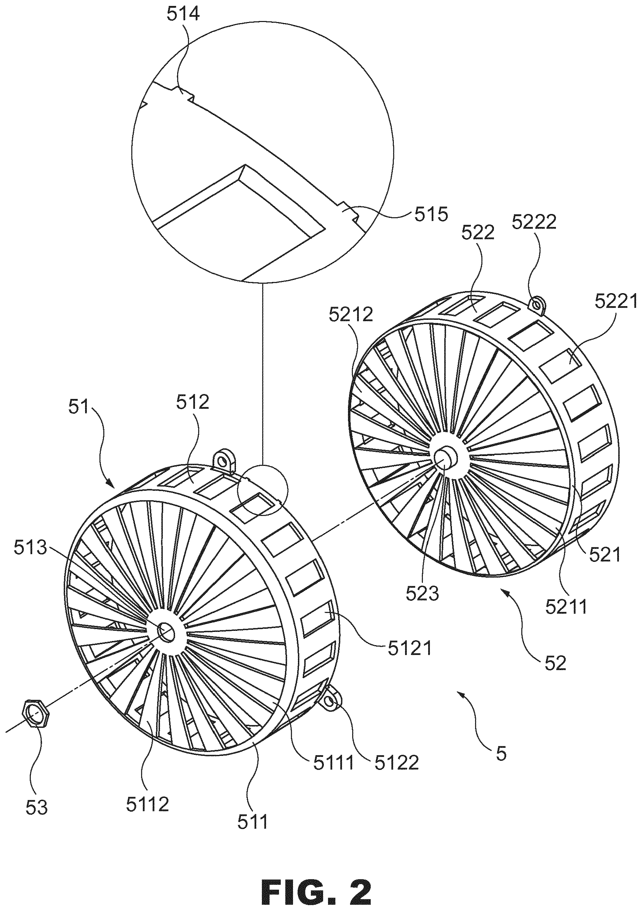

With reference to FIGS. 1 and 2 for an engine temperature regulating device of the present invention, the engine temperature regulating device 1 is installed to a casing with a cooled air inlet and comprises a power source 2, a link rod module 3, a control module 4 and a fan cover module 5. The link rod module 3 is connected to the power source 2, and the power source 2 is preferably stepper motor; the control module 4 is provided for detecting a temperature for starting the engine to obtain a temperature signal, and if the temperature signal is lower than a predetermined value, the power source 2 will be controlled and driven, or if the temperature signal reaches a predetermined value, the power source 2 will be controlled to turn off. The fan cover module 5 is covered onto the engine cooled air inlet and comprises a fixed casing 51 and a movable casing 52, wherein the fixed casing 51 is formed by mounting a first surrounding member 512 around a first sidewall 511, and the first sidewall 511 has a plurality of first air intake holes 5111 and a plurality of first shelter plates 5112 arranged alternately with one another, and the first surrounding member 512 has a plurality of first ventilation holes 5121, and at least one fixing block 5122 disposed at the external periphery of the first surrounding member 512 and capable of being secured to the casing with a cooled air inlet. The movable casing 52 is formed by mounting a second surrounding member 522 around a second sidewall 521, and the second sidewall 521 has a plurality of second air intake holes 5211 and a plurality of second shelter plates 5212 arranged alternately with one another and the second surrounding member 522 has a plurality of second ventilation holes 5221, and a positioning block 5222 disposed at the external periphery of the second surrounding member 522 and the link rod module 3 is coupled to the movable casing 52.

In an embodiment of the present invention as shown in FIG. 1 and 2, the fixed casing 51 has an opening 513, a first bump 514 and a second bump 515 formed at the external periphery of the fixed casing 51, and the movable casing 52 has a peg 523 configured to be corresponsive to the opening 513, so that the peg 523 of the movable casing 52 is passed into the opening 513 of the fixed casing 51, and a fastener 53 is provided for securing the peg 523, and the movable casing 52 can be pivotally rotated in the fixed casing 51 by using the peg 523 as an axis, and the positioning block 5222 of the movable casing 52 are limited and rotated between the first bump 514 and second bump 515 of the fixed casing 51.

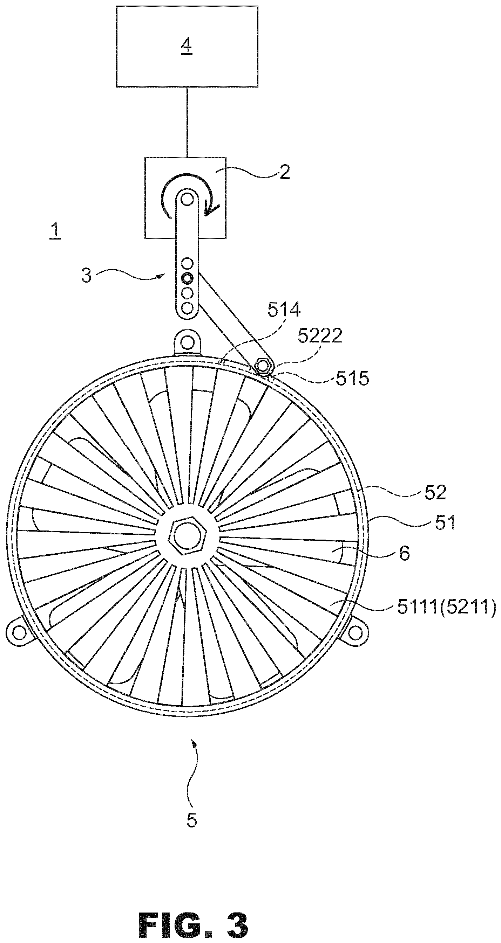

With reference to FIG. 3 for a schematic view showing the initial status of the engine temperature regulating device of the present invention device, the fan cover module 5 is covered onto a cooling fan 6 of the engine. When the engine is not started, the positioning block 5222 of the movable casing 52 abuts against the second bump 515 of the fixed casing 51, so that the first air intake hole 5111 of the fixed casing 51 and the second air intake hole 5211 of the movable casing 52 are superimposed and defaulted to a smooth state.

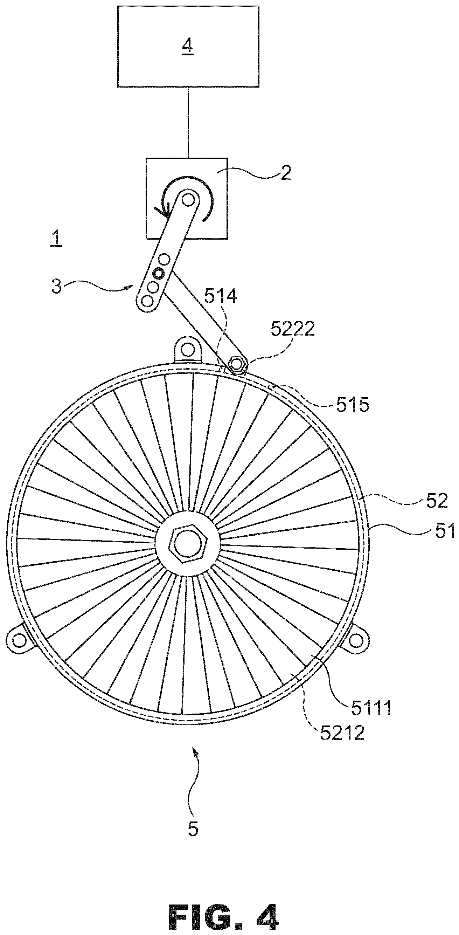

After the engine is started, the control module 4 detects an engine temperature immediately. If a detected temperature signal is lower than a predetermined value, the power source 2 will be controlled and driven to rotate the stepper motor to pull the link rod module 3 (as shown in FIG. 4), so that the positioning block 5222 linked with the link rod module 3 is moved to abut against the first bump 514, and the second shelter plate 5212 of the movable casing 52 is covered onto the first air intake hole 5111 of the fixed casing 51 to set the first air intake hole 5111 to an obscured state. Now, external cold air cannot be entered into the cooled air inlet of the engine from the first air intake hole 5111, sot that the air in the wind hood is limited to accelerate the engine warm-up process.

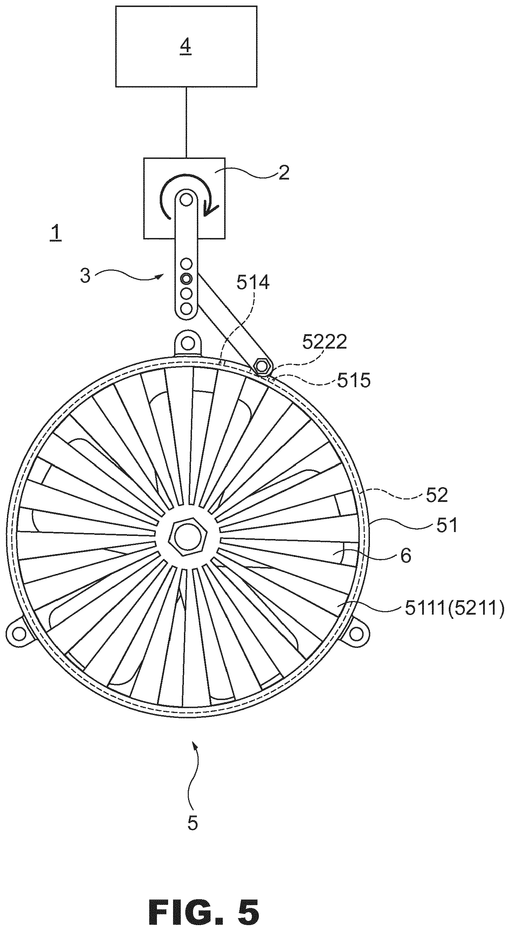

If the engine temperature detected by the control module 4 reaches a predetermined value, the power source 2 will be controlled to turn off, so that the stepper motor stops operating to resume the link rod module 3 to its initial position (as shown in FIG. 5), and the positioning block 5222 linked with the link rod module 3 will be moved back to the position of the second bump 515 to superimpose the first air intake hole 5111 of the of the fixed casing 51 and the second air intake hole 5211 of the movable casing 52 to set them into a smooth state, and the surrounding cold air can be sucked into the air inlet continuously to assist the heat dissipation of the engine.

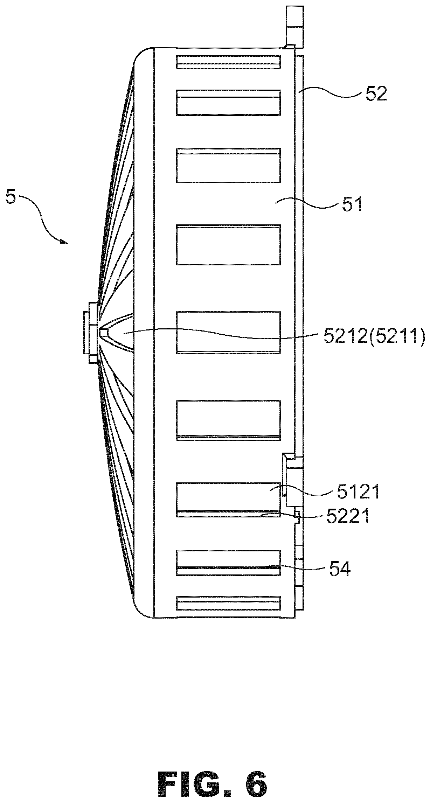

It is noteworthy that the first surrounding member 512 of the fixed casing 51 and the second surrounding member 522 of the movable casing 52 has a plurality of first ventilation holes 5121 and a second ventilation hole 5221 respectively (as shown in FIG. 2). When the second shelter plate 5212 of the movable casing 52 is covered onto the first air intake hole 5111 of the fixed casing 51, the first ventilation hole 5121 of the fixed casing 51 and the second ventilation hole 5221 of the movable casing 52 are not arranged alternately with one another, so as to form a hole 54 (as shown in FIG. 6) and prevent the air inlet of the engine from being closed completely to cause an overheat of the engine or an inconsistent heat dissipation.

Obviously, the engine temperature regulating device 1 of the present invention has the following effects:

1. The device 1 of the present invention can adjust the movement of the movable casing 52 of the fan cover module 5 according to the engine operating temperature, so that when the engine is just started and situated at a cold engine stage temperature which is lower than the operating temperature, the first air intake hole 5111 of the fixed casing 51 is adjusted to the obscured state to stop cooled airflow to enter into the engine and reduce the time for increasing the engine temperature to its operating temperature, so as to achieve the effects of lowering the fuel consumption, reducing the waste gas discharge of the engine. When the engine reaches the operating temperature, the first air intake hole 5111 of the fixed casing 51 resumes its smooth state and lets cooled airflow enter into the engine to assist the heat dissipation.

2. The first air intake hole 5111 and second air intake hole 5211 of the fan cover module 5 of the present invention are defaulted to the smooth state, and thus when the device 1 fails, the fan cover module 5 is in a closed state and the heat dissipation of the engine is affected. In addition, the first ventilation hole 5121 of the fixed casing 51 and the second ventilation hole 5221 of the movable casing 52 reserve a hole 54 when the first air intake hole 5111 is in the obscured state, so as to prevent overheat or inconsistent heat dissipation of the engine.

In summation of the description above, the technical measure disclosed by the present invention definitely can overcome the drawbacks of the prior art and achieve the expected objectives and effects. While the invention has been described by means of specific embodiments, numerous modifications and variations could be made thereto by those skilled in the art without departing from the scope set forth in the claims.

## Claims

1. An engine temperature regulating device (1), installed in a casing with a cooled air inlet, comprising:
a power source (2);
a link rod module (3), connected to the power source (2);
a control module (4), for detecting a temperature for starting the engine to obtain a temperature signal, and controlling the drive of the power source (2) when the temperature signal is lower than a predetermined value or controlling and turning off the power source (2) when the temperature signal achieves the predetermined value; and
a fan cover module (5), covered onto the cooled air inlet, and further comprising:
a fixed casing (51), formed by mounting a first surrounding member (512) around a first sidewall (511), and the first sidewall (511) having a plurality of first air intake holes (5111) and a plurality of first shelter plates (5112) arranged alternately with one another, and disposed at a plurality of first ventilation holes (5121) of the first surrounding member (512), and at least one fixed block (5122) disposed around the external periphery of the first surrounding member (512) and capable of locking the casing with the cooled air inlet; and
a movable casing (52), formed by mounting a second surrounding member (522) around a second sidewall (521), and the second sidewall (521) having a plurality of second air intake holes (5211) and a plurality of second shelter plates (5212) arranged alternately with one another, the second surrounding member (522) having a plurality of second ventilation holes (5221), and a positioning block (5222) disposed around the external periphery of the second surrounding member (522), and the link rod module (3) being coupled to the movable casing (52), and the power source (2) controlling the link rod module (3) to rotate the movable casing (52), so as to adjust the first air intake holes (5111) and the first ventilation holes (5121) of the fixed casing (51) to a smooth or obscured state, and when the first air intake holes (5111) are situated at the obscured state, the first ventilation holes (5121) still maintain holes.

2. The engine temperature regulating device (1) of claim 1, wherein the fixed casing (51) has an opening (513), two bumps (514, 515) formed at the external periphery of the fixed casing (51), and the movable casing (52) has a peg (523) corresponsive to the opening (513), so that after the movable casing (52) passes the peg (523) into the opening (513) of the fixed casing (51), a fastener (53) is screwed and secured to the peg (523), and the movable casing (52) can be pivoted in the fixed casing (51) by using the peg (523) as an axis, and the positioning block (5222) is limited and moved between the two bumps (514, 515).

3. The engine temperature regulating device (1) of claim 1, wherein the power source (2) is a stepper motor.

## Patentansprüche

1. Motortemperatur-Regelgerät (1), das in einem Gehäuse mit einem Lufteintritt für gekühlte Luft installiert ist, umfassend:
eine Stromquelle (2);
ein Verbindungsstangenmodul (3), das an der Stromquelle (2) befestigt ist;
ein Regelmodul (4) zum Erkennen einer Temperatur zum Starten des Motors, um ein Temperatursignal zu erhalten, sowie zum Steuern des Antriebs der Stromquelle (2), wenn das Temperatursignal niedriger als ein vorbestimmter Wert ist oder die Stromquelle (2) gesteuert und
abgeschaltet wird, wenn das Temperatursignal den vorbestimmten Wert erreicht; und
ein Lüfterhaubenmodul (5), mit dem der Lufteintritt für gekühlte Luft abgedeckt wird, und weiter umfassend:
ein festes Gehäuse (51), das durch Montieren eines ersten umgebenden Glieds (512) um eine erste Seitenwand (511) gebildet wird; die erste Seitenwand (511) mehrere erste Luftansauglöcher (5111) und mehrere erste Schutzplatten (5112), die abwechselnd zueinander angeordnet sind, aufweist, wobei diese an mehreren ersten Lüftungsöffnungen (5121) des ersten umgebenden Glieds (512) vorgesehen sind; und mindestens einen ersten festen Block (5122), der um die Außenperipherie des ersten umgebenden Glieds (512) angeordnet ist und mit dem das Gehäuse mit dem Lufteintritt für gekühlte Luft verriegelt werden kann; und
ein bewegliches Gehäuse (52), das durch Montieren eines zweiten umgebenden Glieds (522) um eine zweite Seitenwand (521) gebildet wird, wobei die zweite Seitenwand (521) mehrere zweite Luftansauglöcher (5211) und mehrere zweite Schutzplatten (5212), die abwechselnd zueinander angeordnet sind, aufweist; das zweite umgebende Glied (522) mehrere zweite Lüftungsöffnungen (5221) aufweist; ein Positionierblock (5222) um die Außenperipherie des zweiten umgebenden Glieds (522) vorgesehen ist; das Verbindungsstangenmodul (3) am beweglichen Gehäuse (52) befestigt ist; mit der Stromquelle (2) das Verbindungsstangenmodul (3) zum Rotieren des beweglichen Gehäuses (52) gesteuert wird, um die ersten Luftansauglöcher (5111) und die ersten Lüftungsöffnungen (5121) des festen Gehäuses (51) in einen ebenen oder verdunkelten Status zu justieren; die ersten Lüftungsöffnungen (5121) weiterhin Löcher aufweisen, wenn die ersten Luftansauglöcher (5111) im verdunkelten Status sind.

2. Motortemperatur-Regelgerät (1) nach Anspruch 1, wobei das feste Gehäuse (51) eine Öffnung (513) aufweist; zwei Unebenheiten (514, 515) an der Außenperipherie des festen Gehäuses (51) geformt sind; das bewegliche Gehäuse (52) in Übereinstimmung mit der Öffnung (513) einen Stift (523) aufweist, so dass nachdem das bewegliche Gehäuse (52) am Stift Stift (523) vorbei in die Öffnung (513) des festen Gehäuses (51) gelangt ist ein Befestigungselement (53) sicher am Stift (523) verschraubt wird, während das bewegliche Gehäuse (52) mit dem Stift (523) mit einer Achse drehgelenkig im festen Gehäuse (51) befestigt ist; der Positionierblock (5222) begrenzt ist und zwischen den zwei Unebenheiten (514, 515) bewegt wird.

3. Motortemperatur-Regelgerät (1) nach Anspruch 1, wobei als Stromquelle (2) ein Schrittmotor verwendet wird.

## Revendications

1. Dispositif régulateur de la température d'un moteur (1), placé dans un boîtier avec une entrée d'air refroidi, **caractérisé par le fait qu'**il comprend :
une source d'alimentation (2) ;
un module de biellette (3), raccordé à la source d'alimentation (2) ;
un module de commande (4), pour détecter une température pour démarrer le moteur pour obtenir un signal de température, et commander l'entraînement de la source d'alimentation (2) lorsque le signal de température est inférieur à une valeur prédéterminée ou commander et éteindre la source d'alimentation (2) lorsque le signal de température atteint la valeur prédéterminée ; et
un module de capot de ventilateur (5), superposé sur l'entrée d'air refroidi, et
**caractérisé par le fait qu'**il comprend en outre :
un boîtier fixe (51), formé par montage d'un premier élément entourant (512) autour d'une première paroi (511), et la première paroi (511) présentant une pluralité de premiers orifices d'admission d'air (5111) et une pluralité de premières plaques d'abri (5112) disposés de manière alternative les uns par rapport aux autres, et disposés au niveau d'une pluralité de premiers orifices de ventilation (5121) du premier élément entourant (512), et au moins un bloc fixe (5122) disposé autour de la périphérie extérieure du premier élément entourant (512) et capable de verrouiller le boîtier avec l'entrée d'air refroidi ; et
un boîtier mobile (52), formé par montage d'un second élément entourant (522) autour d'une seconde paroi (521), et la seconde paroi (521) présentant une pluralité de seconds orifices d'admission d'air (5211) et une pluralité de secondes plaques d'abri (5212) disposés de manière alternative les uns par rapport aux autres, le second élément entourant (522) présentant une pluralité de seconds orifices de ventilation (5221), et un bloc de positionnement (5222) disposé autour de la périphérie extérieure du second élément entourant (522), et le module de biellette (3) étant couplé au boîtier mobile (52), et la source d'alimentation (2) commandant le module de biellette (3) pour tourner le boîtier mobile (52), de manière à ajuster les premiers orifices d'admission d'air (5111) et les premiers orifices de ventilation (5121) du boîtier fixe (51) entre un état occulté et non occulté, et lorsque les premiers orifices d'admission d'air (5111) sont situés dans un état occulté, les premiers orifices de ventilation (5121) conservent encore les orifices.

2. Dispositif régulateur de la température d'un moteur (1) selon la revendication 1, **caractérisé par le fait que** le boîtier fixe (51) présente une ouverture (513), deux protubérances (514, 515) formées sur la périphérie extérieure du boîtier fixe (51), et le boîtier mobile (52) présente un tenon (523) correspondant à l'ouverture (513), de sorte qu'après que le boîtier mobile (52) passe le tenon (523) dans l'ouverture (513) du boîtier fixe (51), un élément de fixation (53) est vissé et fixé sur le tenon (523), et le boîtier mobile (52) peut être pivoté dans le boîtier fixe (51) en utilisant le tenon (523) comme axe, et le bloc de positionnement (5222) est limité et déplacé entre les deux protubérances (514, 515).

3. Dispositif régulateur de la température d'un moteur (1) selon la revendication 1, **caractérisé par le fait que** la source d'alimentation (2) est un moteur pas-à-pas.
